# EUROPEAN PATENT APPLICATION

(11) **EP 2 199 660 A1**
(43) Date of publication of application: **23.06.2010**
(21) Application number: 08171778.7
(22) Date of filing: 16.12.2008
(51) Int. Cl.: F21S 9/02

(54) **Warning lamp with emergency power**

(71) Applicant: Liu, Hung-Chang, Lujhou City T'ai pei Hsien (TW)
(72) Inventor: Liu, Hung-Chang, Lujhou City T'ai pei Hsien (TW)
(74) Representative: Dossmann, Gérard

(57) **Abstract**

A warning lamp with emergency power has a base (10), a power storage module (30), an emergency power provider, a power output connector (60), a light emitting module (80) and a lamp housing (90). The emergency power provider connects electrically to the power storage module (30) and transforms electric power in the power storage module (30) to an emergency power. The power output connector (60) exposes through the base and outputs the emergency power. The light emitting module (80) is powered by the power storage module (30). The lamp housing (90) covers the power storage module (30), the emergency power provider and the light emitting module (80). When an external electronic device is running out of power, the warning lamp provides the emergency to the external electronic device to allow the external electronic device to work temporarily with the emergency power.

## Description

The present invention relates to a warning lamp, and more particularly to a warning lamp that provides emergency power.

To improve safety of pedestrians or bicycle riders on the road at night, warning lamps are applied to backpacks, bags or bicycles to warn drivers in other cars behind the pedestrians or bicycle riders. Each warning lamp comprises a circuit board, a light emitting element and a battery set. The light emitting element and the battery set are mounted and electrically connected to the circuit board. The battery set provides operating power to the light emitting element so the light emitting element emits light. The warning lamp does not work in the daytime so the battery set in the warning lamp has less power consumption. Consequently, the battery set in the warning lamp, for the most of part, has sufficient power storage.

Either the above-mentioned warning lamps or other personal electronic devices, such as cell phones, MP3 players or the like, use the batteries as operating power source. However, unlike the above-mentioned warning lamps, each personal electronic device may have to work any time. The batteries in the personal electronic devices have high power consumption. If a user having the personal electronic devices stays outside most of time in a day, the user has to prepare a backup battery. When the battery in the user's personal electronic device is dead, the dead battery can be replaced by the backup battery. However, if the user forgot to prepare the backup battery or the backup battery has also exhausted, the user's personal electronic device will not work.

To overcome the shortcomings, the present invention provides a warning lamp that provides emergency power to mitigate or obviate the afrorementioned problems.

The main objective of the invention is to provide a warning lamp that provides emergency power.

The warning lamp in accordance with the present invention comprises a base, a power storage module, an emergency power provider, a power output connector, a light emitting module and a lamp housing. The power storage module is mounted in the base and stores electric power. The emergency power provider is mounted in the base, connects electrically to the power storage module and transforms the electric power in the power storage module to an emergency. The power output connector exposes through the base and electrically connects to the power transformation circuit to obtain and output the emergency power. The light emitting module electrically connects to the power storage module and operates with the electric power in the power storage module. The lamp housing is detachably mounted on the base, covers the power storage module, the emergency power provider and the light emitting module. When an external electronic device is running out of power, the warning lamp can provide the emergency to the external electronic device to allow the external electronic device to work temporarily with the emergency power.

Other objectives, advantages and novel features of the invention will become more apparent from the following detailed description when taken in conjunction with the accompanying drawings.
Fig. 1 is a front perspective view of a first embodiment of a warning lamp in accordance with the present invention;
Fig. 2 is an exploded view of the warning lamp in Fig. 1;
Fig. 3 is a rear perspective view of the warning lamp in Fig. 1;
Fig. 4 is an exploded view of the warning lamp in Fig. 3;
Fig. 5 is a side view of the warning lamp in Fig. 1 being mounted on a bicycle;
Fig. 6 is a side view of a second embodiment of a warning lamp in accordance with the present invention being mounted on a backpack;
Fig. 7 is a circuit diagram of a power input connector, a power storage module, a emergency power provider and a power output connector in the warning lamp in Fig. 1; and
Fig. 8 is a side view in partial section of the warning lamp in Fig. 1.

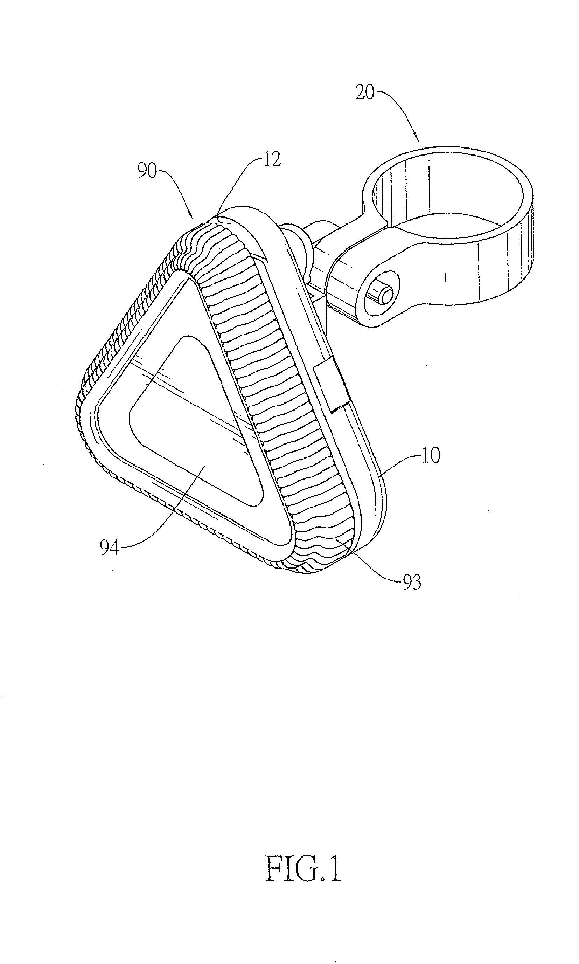

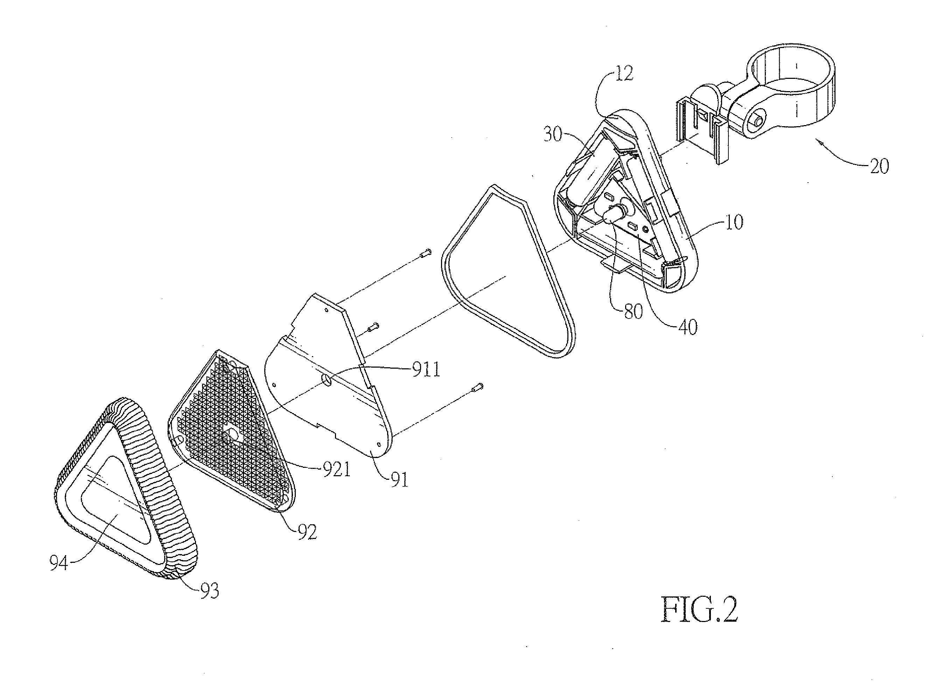

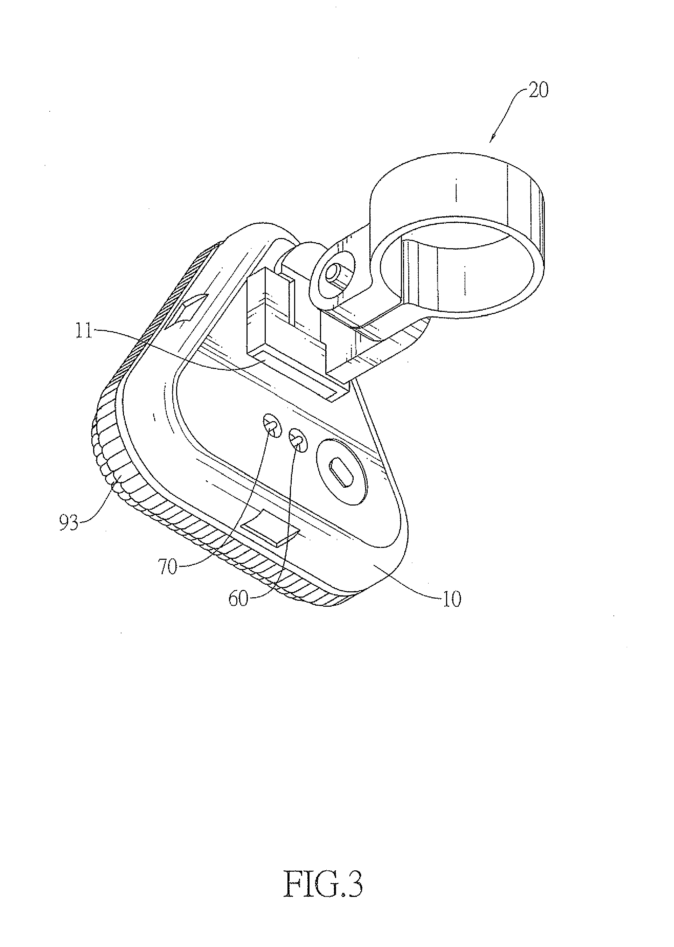

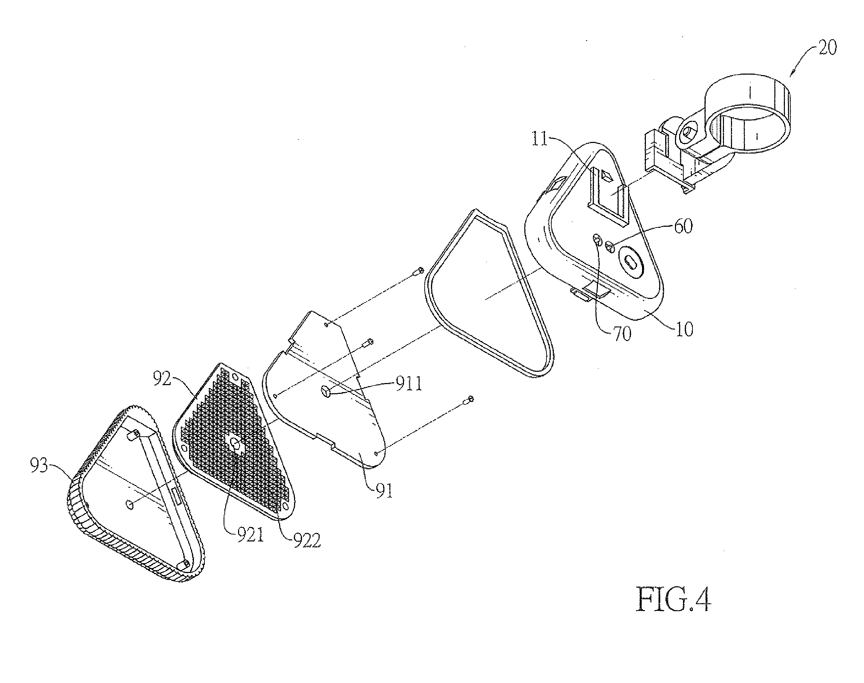

With reference to Figs. 1 to 4, a warning lamp in accordance with the present invention comprises a base (10), an optional external device engage element (20), a power storage module (30), an emergency power provider, a power output connector (60), an optional power input connector (70), a light emitting module (80) and a lamp housing (90).

The base (10) has an outer wall, an optional connecting element (11) and an optional concave plain (12). The connecting element (11) is mounted on the outer wall of the base (10).

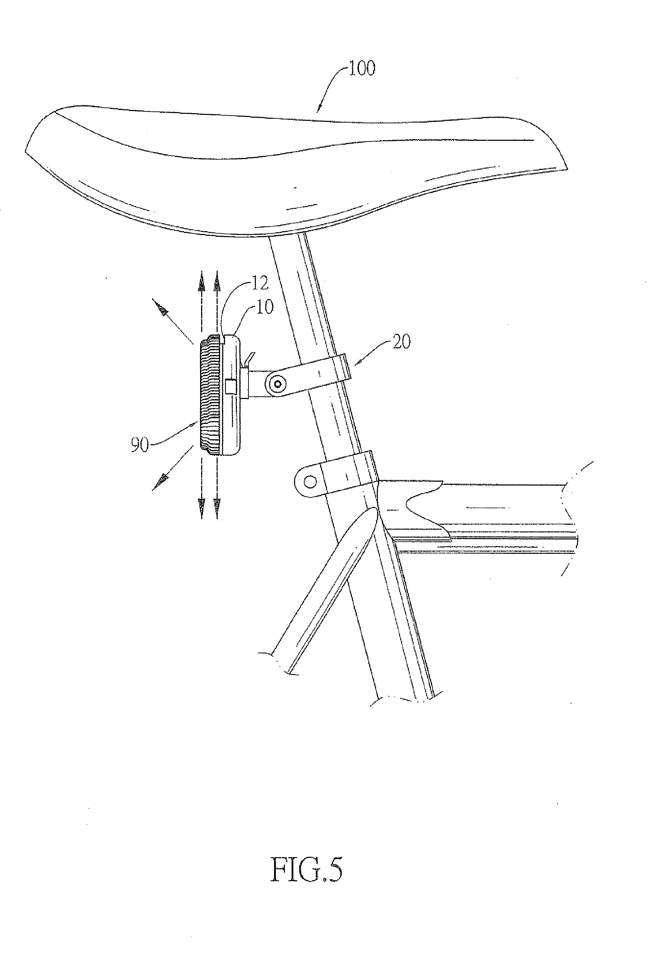

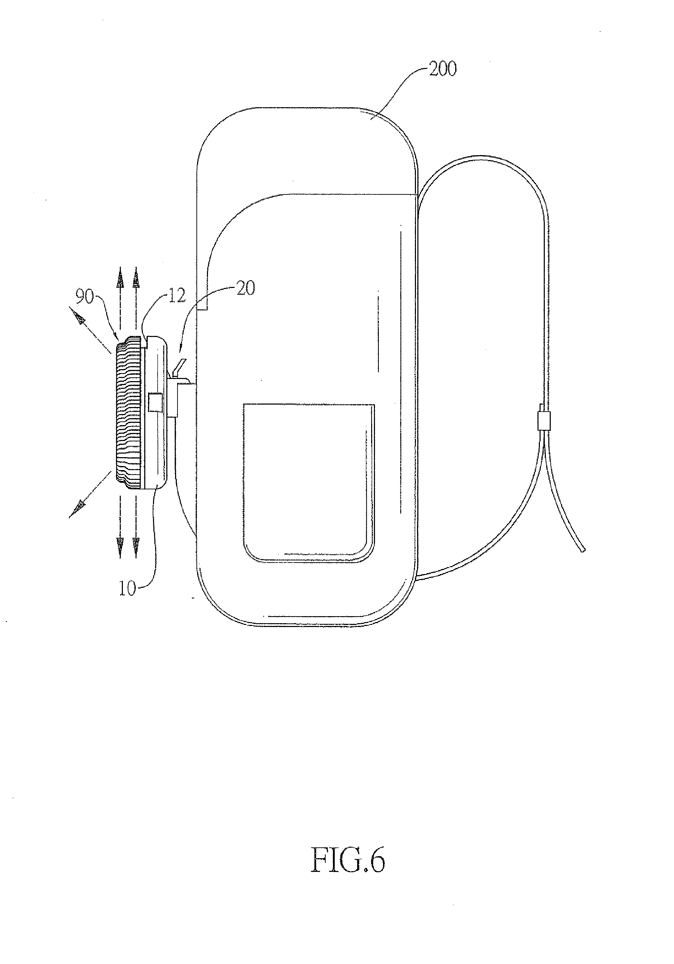

The external device engage element (20) engages detachably with the connecting element (11) to connect the warning lamp to an external device. With further reference to Fig. 5, the external device engage element (20) may be a lock ring to connect the warning lamp to a bicycle (100). With further reference to Fig. 6, the external device engage element (20) may be a clip to connect the warning lamp to a backpack (200).

The power storage module (30) is mounted in the base (10) and stores electric power. The power storage module (30) may be at least one rechargeable battery. For example, three rechargeable batteries may be implemented, and the rechargeable batteries may be connected in series.

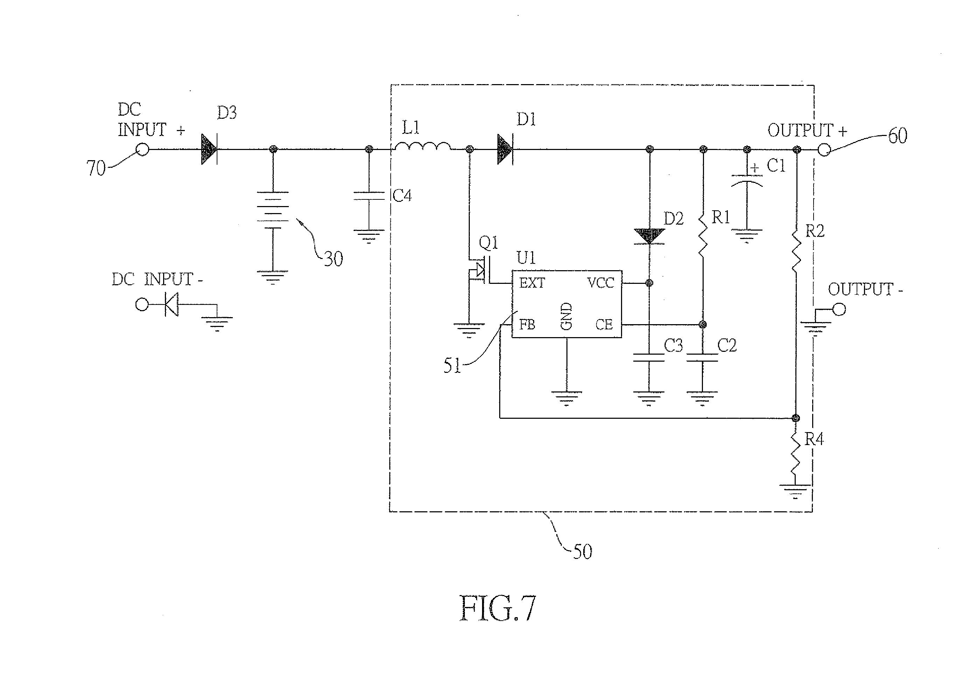

The emergency power provider is mounted in the base (10), connects electrically to the power storage module (30) and transforms the electric power in the power storage module (30) to an emergency power. With further reference to Fig. 7, the emergency power provider may comprise a circuit board (40) and a power transformation circuit (50).

The circuit board (40) is mounted in the base (10).

The power transformation circuit (50) is formed on the circuit board (40), electrically connects to the power storage module (30), transforms the electric power of the power storage module (30) to the emergency power with a voltage level suitable for charging an external electronic device and regulates the voltage level of the emergency power. For example, if the power storage module (30) comprises three batteries connected in series, the total voltage level of the power storage module (30) is 4.5 volts because the voltage level of each battery is 1.5 volts. When the external electronic device such as cell phone, personal digital assistant (PDA), MP3 player or the like requires a 5 volts charge power, the power transformation circuit (50) may have a voltage boost function. If the external electronic device requires a charge power lower than 4.5 volts such as 1.2 volts, the power transformation circuit (50) may have a voltage buck function. If the external electronic device requires a charge power of 4.5 volts, the power transformation circuit (50) may have a power regulation function.

Fig. 7 shows that the power transformation circuit (50) is a boost circuit when the power transformation circuit (50) has a voltage boost function. The boost circuit comprises a boost inductor (L1), a diode (D1), a storage capacitor (C1), an electronic switch (Q1) and a pulse width modulation (PWM) controller (51).

The boost inductor (L1) connects to the power storage module (30).

The diode (D1) has an anode and a cathode. The anode of the diode (D1) connects to the boost inductor (L1).

The storage capacitor (C1) connects between the cathode of the diode (D1) and the ground to serve as an output of the boost circuit to output the emergency power.

The electronic switch (Q1) connects to the boost inductor (L1) and the anode of the diode (D1).

The PWM controller (51) has an EXT terminal and a FB terminal. The EXT terminal connects to the electronic switch (Q1). The FB terminal connects to the cathode of the diode (D1) and is connected to the storage capacitor (C1) through a voltage divider (R2, R4) to obtain the emergency power. The PWM controller (51) regulates a duty cycle of the electronic switch (Q1) based on a feedback emergency power through the voltage divider (R2, R4) to maintain the emergency power.

The power output connector (60) may be mounted on the circuit board (40), electrically connects to the power transformation circuit (50) to obtain and output the emergency power. The power output connector (60) exposes through the base (10) to connect and provide the emergency power to the external electronic device through a power wire.

The power input connector (70) is mounted on the circuit board (40), electrically connects to the power storage module (30) and exposes through the base (10). The power input connector (70) obtains a DC power from a power adapter or from a power generator on the bicycle (100) to charge the power storage module (30).

The light emitting module (80) may be mounted on the circuit board (40), electrically connects to the power storage module (30) and is powered by the power storage module (30).

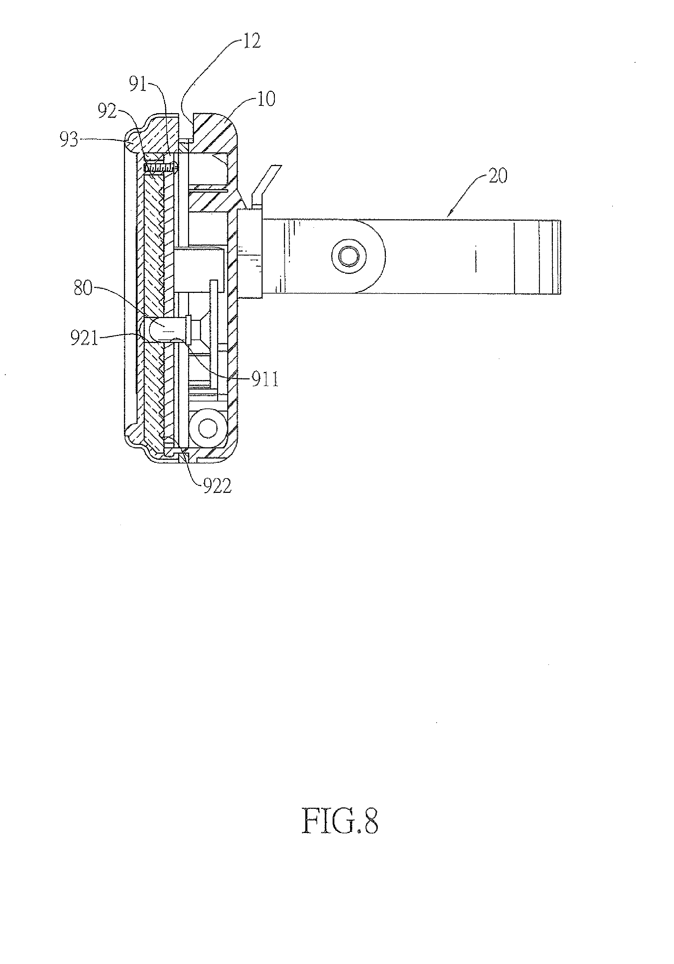

The lamp housing (90) is detachably mounted on the base (10), covers the power storage module (30), the emergency power provider and the light emitting module (80). Furthermore, a gap is between the concave plain (12) and the lamp housing (90) to easily detach the lamp housing (90) from the base (10). With further reference to Fig. 8, the lamp housing (90) comprises a light blocker (91), a refractor (92), a lens cover (93) and a reflector (94).

The light blocker (91) is mounted on the base (10), covers the power storage module (30) and the emergency power provider and has a first through hole (911). The first through hole (911) allows the light emitting module (80) to pass through the light blocker (91).

The refractor (92) is transparent, covers the light blocker (91) and has a front, a rear, multiple edges, a second through hole (921) and multiple refraction elements. The second through hole (921) is formed through the front and the rear of the refractor (92), corresponds to the first through hole (911) on the light blocker (91) and allows the light emitting module (80) passing through the refractor (92). The refraction elements are formed on the refractor (92) to refract light beams toward the edges of the refractor (92). For example, the refraction elements may be refraction caves (922) formed on the rear of the refractor (92).

The lens cover (93) caps the refractor (92) and has a front and multiple transparent sidewalls.

The reflector (94) is smaller than the lens cover (93), is mounted on the front of the lens cover (93) and faces the second through hole (921) on the refractor (92).

When the light emitting module (80) passes through the light blocker (91) and the refractor (92) and the reflector (94) corresponds to the second through hole (921) on the refractor (92), most of the light beams from the light emitting module (80) will be reflected by the reflector (94). Only a few light beams from the light emitting module (80) will pass through the front of the lens cover (93). Accordingly, a dark zone is on the front of the lens cover (93). Furthermore, the light beams reflected by the reflector (94) will be refracted toward the edges of the refractor (92) by the refraction caves (922) on the refractor (92). The refracted light beams will pass through the sidewalls of the lens cover (93). Therefore, a light zone is on the sidewalls of the lens cover (93) on the warning lamp of the present invention and around the dark zone. Consequently, the warning lamp of the present invention has wide irradiation angel.

The above-mentioned warning lamp provides good caution effect when the warning lamp is installed on a bicycle (100) or a backpack (200) because of its wide irradiation angel. In addition, when an external electronic device is running out of power and a user on the bicycle (100) or carrying the backpack (200) with the warning lamp is in urgent need of using the external electronic device, the warning lamp can provide the emergency power to the external electronic device. The external electronic device works temporarily with the emergency power. Furthermore, if the power storage module (30) comprises at least one rechargeable battery, the power storage module (30) can be charged by an external power source such as the utility power or a power generator on the bicycle (100) over the power input connector (70).

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A warning lamp with emergency power comprising:
a base (10) having an outer wall;
a power storage module (30) being mounted in the base (10) and storing electric power;
an emergency power provider being mounted in the base (10), electrically connecting to the power storage module (30) and transforming the electric power in the power storage module (30) to an emergency;
a power output connector (60) exposing through the base (10) and electrically connecting to the emergency power provider to obtain and output the emergency power;
a light emitting module (80) electrically connecting to the power storage module (30) and being powered by the power storage module (30); and
a lamp housing (90) being mounted on the base (10), covering the power storage module (30), the emergency power provider and the light emitting module (80).

2. The warning lamp as claimed in claim 1, wherein the lamp housing (90) comprises:
a light blocker (91) being mounted on the base (10), covering the power storage module (30) and the emergency power provider and having
a first through hole (911) allowing the light emitting module (80) to pass through the light blocker (91);
a refractor (92) being transparent, covering the light blocker (91) and having
a front;
a rear;
multiple edges;
a second through hole (921) being formed through the front and the rear of the refractor (92), corresponding to the first though hole (911) on the light blocker (91) and allowing the light emitting module (80) passing through the refractor (92); and
multiple refraction elements being formed on the refractor (92) to refract light beams toward the edges of the refractor (92);
a lens cover (93) capping the refractor (92) and having a front and multiple sidewalls, and the light beams refracted by the refraction elements on the refractor (92) passing through the sidewalls of the lens cover (93); and
a reflector (94) being smaller than the lens cover (93), being mounted on the front of the lens cover (93) and facing the second through hole (921) on the refractor (92).

3. The warning lamp as claimed in claim 2, wherein the refraction elements are refraction caves (922) formed on the rear of the refractor (92).

4. The warning lamp as claimed in claims 1, 2 or 3 further comprising an external device engage element (20), wherein:
the base (10) further has a connecting element (11) being mounted on the outer wall of the base (10); and
the external device engage element (20) engages detachably with the connecting element (11) to be adapted to connect the warning lamp with an external device.

5. The warning lamp as claimed in claim 4, wherein the external device engage element (20) is a lock ring.

6. The warning lamp as claimed in claim 4, wherein the external device engage element (20) is a clip.

7. The warning lamp as claimed in claims 1, 2 or 3, wherein the emergency power provider comprises:
a circuit board (40) being mounted in the base (10), and the power output connector (60) and the light emitting module (80) being mounted on the circuit board (40); and
a power transformation circuit (50) being formed on the circuit board (40), electrically connecting to the power storage module (30), transforming the electric power in the power storage module (30) to the emergency power and regulating a voltage level of the emergency power.

8. The warning lamp as claimed in claim 4, wherein the emergency power provider comprises:
a circuit board (40) being mounted in the base (10), and the power output connector (60) and the light emitting module (80) being mounted on the circuit board (40); and
a power transformation circuit (50) being formed on the circuit board (40), electrically connecting to the power storage module (30), transforming the electric power in the power storage module (30) to the emergency power and regulating a voltage level of the emergency power.

9. The warning lamp as claimed in claim 8, wherein the power transformation circuit (50) is a boost circuit.

10. The warning lamp as claimed in claim 9, wherein the power transformation circuit (50) comprises:
a boost inductor (L1) connecting to the power storage module (30);
a diode (D1) having an anode and a cathode, and the anode of the diode (D1) connecting to the boost inductor;
a storage capacitor (C1) connecting to the cathode of the diode (D1);
an electronic switch (Q1) connecting to the boost inductor (L1) and the anode of the diode (D1); and
a pulse width modulation (PWM) controller (51) connecting to the cathode of the diode (D1) and the electronic switch (Q1), being connected to the storage capacitor (C1) through a voltage divider (R2, R4) to obtain the emergency power and regulate a duty cycle of the electronic switch (Q1) based on a feedback emergency power through the voltage divider (R2, R4) to maintain the emergency power.

11. The warning lamp as claimed in claims 7 further comprising a power input connector (70) being mounted on the circuit board (40), electrically connecting to the power storage module (30), exposing through the base (10) and being adapted to obtain a DC power to charge the power storage module (30).

12. The warning lamp as claimed in claim 8 further comprising a power input connector (70) being mounted on the circuit board (40), electrically connecting to the power storage module (30), exposing through the base (10) and being adapted to obtain a DC power to charge the power storage module (30).
